# EUROPÄISCHE PATENTSCHRIFT

(11) **EP 3 475 593 B1**
(45) Veröffentlichungstag und Bekanntmachung des Hinweises auf die Patenterteilung: **29.01.2020**
(21) Anmeldenummer: 17732334.2
(22) Anmeldetag: 07.06.2017
(51) Int. Cl.: B29C 70/48, B60G 11/02, B60G 11/12, F16F 1/368

(54) **FASERVERBUNDBAUTEIL**
FIBRE COMPOSITE COMPONENT
ÉLÉMENT COMPOSITE RENFORCÉ PAR DES FIBRES

(30) Priorität: 22.06.2016 DE 202016103285 U
(43) Veröffentlichungstag der Anmeldung: 01.05.2019
(73) Patentinhaber: Sogefi HD Suspensions Germany GmbH, 58135 Hagen (DE)
(72) Erfinder: KRIEG, Nikolaj, 58135 Hagen (DE)
(74) Vertreter: Haverkamp, Jens
(86) Internationale Anmeldenummer: PCT/EP2017/063783
(87) Internationale Veröffentlichungsnummer: WO 2017/220321

(56) Entgegenhaltungen:
- EP-A1- 1 308 265
- FR-A- 598 724
- FR-A1- 2 587 649
- US-A- 3 376 033

## Beschreibung

Die Erfindung betrifft ein als Feder ausgeführtes Faserverbundbauteil mit wenigstens einem Federabschnitt und mit wenigstens einer Lasteinleitungsstruktur, wobei das Faserverbundmaterial des Faserverbundbauteils in dem das Lasteinleitungselement bildenden oder einfassenden Endabschnitt in einer Ebene quer zur Längserstreckung der Lasteinleitungsstruktur in zumindest zwei Faserverbundmaterialstränge geteilt ist.

Faserverbundbauteile werden bei vielen Anwendungen zum Ersatz herkömmlich aus Stahl hergestellter Strukturbauteile eingesetzt. Bei derartigen Strukturbauteilen kann es sich auch um Feder bzw. Federelemente handeln, etwa Fahrzeugfedern, beispielsweise Teile von Radaufhängungen, etwa Lenker oder Blattfedern. Derartige Faserverbundbauteile sind langgestreckt, da deren Längserstreckung um ein Vielfaches größer ist als die Erstreckung in Querrichtung dazu, und somit in Bezug auf die Breite und die Höhe eines solchen Bauteils. Zum Anschluss an andere Komponenten verfügen derartige Bauteile über wenigstens eine Lasteinleitungsstruktur. Diese ist üblicherweise als Auge ausgeführt. Bei herkömmlich geschmiedeten Bauteilen der in Rede stehenden Art sind derartige Augen in aller Regel geschlossen. Bei Blattfedern, bei denen die Augen durch einen Walzvorgang erstellt werden, sind diese mitunter auch geöffnet. Als Lasteinleitungsstruktur kann bei derartigen Bauteilen auch ein Anschlusszapfen dienen, der ein- oder beidseitig quer zur Längserstreckung des Bauteils an seinem einen Ende von diesem abragt.

Faserverbundbauteile der in Rede stehenden Art sind vorbekannt. In DE 10 2006 047 412 B1 ist beispielsweise eine stabförmige Faserverbundstruktur mit Lasteinleitungselementen beschrieben. Bei dieser Faserverbundstruktur handelt es sich um eine strukturelle Komponente eines Hydraulikaktuators. Diese vorbekannte Faserverbundstruktur wird aus zwei Halbschalen zusammengesetzt, die von einer Bandage mit umlaufender Faserverstärkung umgeben ist.

DE 10 2010 009 528 A1 offenbart ein als Blattfeder ausgeführtes Faserverbundbauteil. Als Lasteinleitungsstruktur ist bei diesem vorbekannten Faserverbundbauteil ein Lagerauge vorgesehen. Zum Aufbau dieser Lasteinleitungsstruktur wird eine Hülse als Lasteinleitungselement verwendet, die von dem Endabschnitt des Faserverbundmaterials umschlungen ist. Zur Ausbildung eines geschlossenen Auges aus dem Faserverbundmaterial wird dieses im Bereich seines Endes zum Ausbilden einer schmaleren Zunge zurechtgeschnitten. In der Flucht dieser endseitigen Zunge wird in den zur Ausbildung des Faserverbundbauteils verwendeten Prepreg-Streifen eine Öffnung ausgeschnitten, in die nach Umschlingen der Hülse die endseitige Zunge eingeführt wird. Der aus der Öffnung herausragende Endabschnitt der Zunge wird abgetrennt. Auf diese Weise wird die endseitige Stirnfläche des Prepreg-Streifens nach Umschlingung der Hülse als Lasteinleitungselement zu dem diesbezüglichen Ende des eigentlichen Federabschnittes zurückgeführt.

Problematisch ist bei Faserverbundbauteilen der in Rede stehenden Art bei einer Belastung, insbesondere bei einer Schub- und/oder Zugbelastung, die Gefahr einer Delamination des für die Herstellung des Faserverbundbauteils eingesetzten Faserverbundmaterials. Dieses ist unerwünscht, da dieses zu einem Versagen des Faserverbundbauteils führt.

Auch wenn mit dem aus DE 10 2010 009 528 A1 vorbekannten Faserverbundbauteil die Gefahr einer Delamination gegenüber anderen Faserverbundbauteilen, bei denen eine Lasteinleitungsstruktur durch eine Schlinge ausgebildet ist, verbessert ist, ist die Belastbarkeit eines solchen Faserverbundbauteils, vor allem bei dynamischen Belastungen in aller Regel zu gering. Dieses könnte man durch eine entsprechend breitere Auslegung der Blattfeder kompensieren. Oftmals steht der dazu notwendige Bauraum jedoch nicht zur Verfügung. Darüber hinaus muss dann wieder mehr Material eingesetzt werden, was sich nachteilig die gewünschte Gewichtsersparnis, die mit diesem Faseverbundbauteil bewirkt werden soll, auswirkt. Zudem ist mit erhöhten Kosten zu rechnen.

Ein als Feder ausgeführtes Faserverbundbauteil mit den Merkmalen des Oberbegriffs des Anspruchs 1 ist aus FR 2 587 649 A1 bekannt.

Ausgehend von diesem diskutierten Stand der Technik liegt der Erfindung daher die Aufgabe zugrunde, ein Faserverbundbauteil, welches nicht nur hohen Belastungen bei einem vertretbaren Einsatz an Material gestattet, sondern bei dem zudem die Gefahr einer Delamination gegenüber eines Faserverbundbauteils, dessen Lasteinleitungsstruktur durch eine Faserverbundmaterialschlinge bereitgestellt wird, reduziert ist.

Gelöst wird diese Aufgabe erfindungsgemäß durch ein eingangs genanntes, gattungsgemäßes Faserverbundbauteil, bei dem zwei benachbarte Faserverbundmaterialstränge zur Ausbildung jeweils eines Auges gegensinnig unter Ausbildung einer sich über einen bestimmten Winkelbetrag erstreckenden Überlappung geführt und mit ihren zueinander weisenden Seitenflächen, in dem Abschnitt, in dem diese überlappend angeordnet sind, kraftschlüssig miteinander verbunden sind.

Bei diesem Faserverbundbauteil ist die Lasteinleitungsstruktur durch zumindest zwei Faserverbundmaterialstränge ausgebildet. Bei der Lasteinleitungsstruktur handelt es sich typischerweise um ein Auge, welches als offenes oder auch geschlossenes Auge ausgeführt sein kann. Das besondere bei dem erfindungsgemäßen Faserverbundbauteil ist, dass die Umschlingungs- bzw. Wickelrichtung benachbarter Faserverbundmaterialstränge um zur Ausbildung der Lasteinleitungsstruktur gegensinnig ist. Dieses bedeutet, dass, für den Fall, dass ein erster Faserverbundmaterialstrang zur Ausbildung eines Auges im Uhrzeigersinn geführt ist, wohingegen das eine oder die beiden benachbarten Faserverbundmaterialstränge in entgegengesetzter Umschlingungs- bzw. Wickelrichtung und somit linksherum geführt sind. Der Umschlingungsbetrag, mit dem die Faserverbundmaterialstränge zur Ausbildung des Auges der Lasteinleitungsstruktur geführt sind, ist zumindest so groß, dass benachbarte Faserverbundmaterialstränge über einen bestimmten Winkelbetrag überlappend sind. In dem Überlappungsbereich grenzen die zueinander weisenden Seiten dieser Faserverbundmaterialstränge im Bereich der überlappenden Anordnung aneinander. Diese Seitenflächen sind zudem kraftschlüssig, typischerweise stoffschlüssig durch das ausgehärtete Harz des Faserverbundbauteils miteinander verbunden.

Von Vorteil ist, dass bei dieser Auslegung das Faserverbundmaterial im Bereich seiner zumindest einen Lasteinleitungsstruktur in einer Ebene quer zur Längserstreckung seines Auges geteilt ist. Das Maß der Umschlingung des Lasteinleitungselementes ist somit alleinig von der Länge der Faserverbundmaterialstränge abhängig. Somit ist durch dieses Konzept die übrige Auslegung des Faserverbundbauteils unbeeinflusst von der Ausbildung der Lasteinleitungsstruktur. Die Lasteinleitungsstruktur kann somit unabhängig von den übrigen Bestandteilen des Faserverbundbauteils ausgelegt werden. Dieses gilt auch umgekehrt für die Auslegung der übrigen Teile des Faserverbundbauteils in Bezug auf die Lasteinleitungsstruktur.

Die Überlappung hinsichtlich der gegensinnigen Umschlingungsrichtung benachbarter Faserverbundmaterialstränge erlaubt die Ausbildung eines insbesondere auch großflächigen Aneinanderanliegens zweier benachbarter Faserverbundmaterialstränge. Der Verbund benachbarter Faserverbundmaterialstränge miteinander gewährleistet, dass in die Lasteinleitungsstruktur hohe Kräfte eingeleitet werden können und zudem eine Delamination wirksam verhindert ist. Der großflächige Verbund benachbarter Faserverbundmaterialstränge trägt dazu bei, dass bei Vorsehen eines Lasteinleitungselement dieses sicher in der Faserverbundstruktur der Lasteinleitungsstruktur aufgenommen ist. Bei einem solchem Lasteinleitungselement, welches von den Verbundfasermaterialeinsträngen eingefasst ist, kann es sich beispielsweise um eine Metallhülse handeln.

Durch jeden Faserverbundmaterialstrang wird ein Auge vorzugsweise mit mehr als 270° gebildet. Die Seitenkontaktfläche dieser Faserverbundmaterialstränge erstreckt sich sodann über zumindest 90°. Vorzugsweise werden die durch die Faserverbundmaterialstränge gebildeten Augen, die gemeinsam das Auge der Lasteinleitungsstruktur bilden, jedoch geschlossen oder annähernd geschlossen ausgeführt. Dann ist der stirnseitige Stoß der Faserverbundmaterialstränge bis an oder quasi an die Oberfläche des übrigen Teils des Faserverbundmaterials zurückgeführt. Durch das für die abschließende Formung des Faserverbundbauteils eingesetzte Harz, durch das auch ein verbliebener Spalt zwischen der zurückgeführten Stirnfläche eines solchen Faserverbundmaterialstranges füllt, wird dann durch jeden Faserverbundmaterialstrang ein geschlossenes Auge ausgebildet.

Von besonderem Vorteil eines solchen Faserverbundbauteils mit seiner in einer Ebene quer zur Längserstreckung des Lasteinleitungselementes endseitig zur Ausbildung einer Lasteinleitungsstruktur geteilten Faserverbundmaterialstränge ist zudem, dass die Lasteinleitungsstruktur hinsichtlich ihrer Lasteinleitungscharakteristik an die Bedürfnisse bei der Anwendung bzw. bei dem Einsatz eines solchen Faserverbundbauteils angepasst werden kann. In Abhängigkeit von der zu erwartenden Belastung kann durchaus vorgesehen sein, dass die Querschnittsfläche der Summe der Faserverbundmaterialstränge, die in einer ersten Umschlingungsrichtung ein Auge bilden, unterschiedlich ist zu der Summe Querschnittsfläche der Faserverbundmaterialstränge, mit denen das oder die entsprechenden Augen in der anderen Umschlingungsrichtung gebildet sind. Eine Lasteinleitungsstruktur lässt sich mit diesem Konzept in Bezug auf die Mittelquerebene der Lasteinleitungsstruktur symmetrisch oder asymmetrisch auslegen. Eine asymmetrische Auslegung bietet sich beispielsweise für solche Anwendungen an, bei denen Torsionsbelastungen über die Lasteinleitungsstruktur aufgenommen werden müssen, wenn diese aus einer bestimmten Funktionsrichtung eingreifen.

Die Anzahl der Faserverbundmaterialstränge, mit der das Auge einer Lasteinleitungsstruktur gebildet bzw. eingefasst ist, beträgt mindestens zwei. Vorzugsweise wird jedoch eine ungerade Anzahl an Faserverbundmaterialsträngen gewählt werden, um die Wechselfolge einer gegensinnigen Umschlingungsrichtung ausgehend von seiner Mittelquerebene in beide Richtungen symmetrisch auslegen zu können. Dies bezieht sich auf die Wechselfolge und nicht unbedingt auf die Breite jedes Faserverbundmaterialstranges. Je größer die Anzahl der Verbundmaterialstränge ist, bei denen benachbarte Faserverbundmaterialstränge jeweils gegensinnig zur Ausbildung des Auges der Lasteinleitungsstruktur gewickelt herumgeführt sind, desto höher ist die Belastbarkeit der dadurch bereitgestellten Lasteinleitungsstruktur. Für viele Anwendungen wird es ausreichend sein, wenn die Anzahl der Faserverbundmaterialstränge 3 oder 5 beträgt.

Als Faserverbundmaterial können undirektional ausgerichtete Fasern, Faserstränge ebenso, wie gewebtes Fasermaterial, Faservlies oder dergleichen eingesetzt werden. Werden keine Faserstränge eingesetzt, die in ihrem Endbereich ohne weiteres in die benötigten Faserverbundmaterialstränge geteilt werden können, wird der Endabschnitt, an dem eine Lasteinleitungsstruktur ausgebildet werden soll, durch ein oder mehrere Schnitte in die für die gegensinnige Umschlingung benötigten Faserverbundmaterialstränge geteilt.

Ein solches Faserverbundbauteil kann an mehreren Stellen eine solche Lasteinleitungsstruktur aufweisen. Handelt es sich bei dem Faserverbundbauteil um beispielsweise eine Blattfeder, wird diese an ihren beiden Enden mit einer solchen Lasteinleitungsstruktur ausgerüstet sein. Bei einem solchen Faserverbundbauteil kann es sich durchaus auch um einen Rahmen, einen Hilfsrahmen, einen Lenker oder dergleichen handeln, der zumindest eine solche Lasteinleitungsstruktur aufweist.

In einem Ausführungsbeispiel ist durch die Augen der Faserverbundmaterialstränge einer solchen Lasteinleitungsstruktur ein gemeinsames Lasteinleitungselement, beispielsweise eine Metallhülse, eingefasst. Die Querschnittsfläche einer solchen Metallhülse kann eine kreisrunde Querschnittsfläche aufweisen. Aufgrund des Einfassens eines solchen Lasteinleitungselementes in der vorbeschriebenen Art und Weise kann die Querschnittsfläche eines solchen Lasteinleitungselementes auch von der rundlichen Form abweichen, beispielsweise auch viereckig ausgeführt sein.

Die Federkennlinie einer solchen, als Faserverbundbauteil hergestellte Feder, beispielsweise einer Blattfeder kann unter anderem über den Faservolumengehalt des Faserverbundbauteiles eingestellt werden. Der Faservolumengehalt gibt den volumetrischen Anteil der eingesetzten Fasern, typischerweise Glasfasern, an der konkreten Geometrie des Bauteils an. Insofern gibt der Faservolumengehalt bezogen auf die Querschnittsfläche eines solchen, als Feder ausgelegten Faserverbundbauteils den Anteil an Fasern bezogen auf die Querschnittsfläche an. Ein solches, beispielsweise als Parabelfeder ausgelegtes Faserverbundbauteil kann über die Erstreckung seines Federabschnittes, in diesem Fall: seines Federarmes einen konstanten Faservolumengehalt aufweisen. Auf Grund der Reduzierung der Querschnittsfläche in Richtung zu dem Lasteinleitungselement hin, nimmt bei konstantem Faservolumengehalt die tatsächlich eingesetzte Fasermenge in dieser Richtung ab. Um bei Federbeanspruchungen wie etwa einem Einfedern Kerbwirkungen zu reduzieren, sind die Decklagen der Faserstränge durchgängig ausgeführt. In dem oder in den ein Lasteinleitungselement bildenden oder einfassenden Endabschnitten kann der Faservolumengehalt gegenüber demjenigen in dem Federabschnitt, also beispielsweise in dem Federarm, reduziert sein. Ausgenutzt wird hierbei der Umstand, dass diese Endabschnitte weniger Beanspruchung in Faserlängsrichtung ertragen müssen und hauptsächlich interlaminar belastet sind. Vielmehr ist vorgesehen, dass diese Endabschnitte auch nicht, jedenfalls nicht nennenswert elastisch reagieren sollen, was durch den erhöhten Harzanteil gewährleistet ist. Der geringere Einsatz an Fasersträngen wirkt sich gewichtsreduzierend auf das Faserverbundbauteil aus. Auch im Übergang in einen solchermaßen ausgebildeten Endabschnitt sind typischerweise die Decklagen der Faserstränge durchgängig. Vorteilhaft bei einer solchen Ausgestaltung ist auch, dass die Injektionsmasse sich bei Infusionsprozessen bereits bei geringerem Druck in der einen solchen Endabschnitt ausbildenden Form besser verteilen lässt. Grund hierfür ist die geringere Anzahl an das Strömungsverhalten der injizierten Masse beinträchtigeren Fasersträngen in dem zumindest einen Endabschnitt. Untersuchungen haben gezeigt, dass in dem zumindest einen Endabschnitt der Faservolumengehalt bis zu 50 % bei gleicher Faserverbundbauteilqualität reduziert werden konnte. Das Maß einer solchen Faservolumengehaltsreduktion in dem zumindest einen Endabschnitt wird man in Abhängigkeit von der dem Faserverbundbauteil zugedachten Anwendung auslegen.

Die Variation im Faservolumengehalt über die Längserstreckung des als Feder ausgelegten Faserverbundbauteils stellt eine weitere Beeinflussungsmöglichkeit zum Auslegen derartiger Faserverbundbauteile dar. Dadurch ist die Gestaltungsfreiheit bei der Konzeption eines solchen, als Feder ausgeführten Faserverbundbauteils gegenüber solchen, die herkömmlich aus Stahl hergestellt sind, erhöht, insbesondere ohne Einfluss auf das Herstellungsverfahren nehmen zu müssen.

Ein weiterer Freiheitsgrad in der Auslegung eines solchen, als Feder ausgeführten Faserverbundbauteils ist, dass der Faservolumengehalt in den Faserverbundmaterialsträngen zumindest teilweise unterschiedlich sein kann. So können beispielsweise Faserverbundmaterialstränge, die in Querrichtung zu der Feder nebeneinander angeordnet sind, einen gleichen Faservolumengehalt aufweisen, während die darunter oder darüber befindlichen Verbundmaterialfaserstränge einen anderen Faservolumengehalt aufweisen. Ebenfalls ist es möglich, in Querrichtung des Faserverbundbauteils Faserverbundmaterialstränge mit unterschiedlichem Faservolumengehalt anzuordnen.

Die Erfindung ist nachstehend anhand eines Ausführungsbeispiels unter Bezugnahme auf die beigefügten Figuren beschrieben. Es zeigen:
- **Fig. 1:**: eine perspektivische Darstellung einer als Faserverbundbauteil gefertigten Blattfeder für ein Fahrzeug,
- **Fig. 2:**: eine vergrößerte perspektivische Teilansicht der linken Lastein-leitungsstruktur der Blattfeder der Figur 1,
- **Fig. 3:**: die Lasteinleitungsstruktur der Figur 2 aus einer anderen Per-spektive mit einem teilabgewickelten Faserverbundmateri-alstrang, mit dem ein Lasteinleitungselement umschlungen ist, und
- **Fig. 4:**: die Lasteinleitungsstruktur der Figur 3 in derselben Perspektive, mit dem das Lasteinleitungselement einfassenden Faserver-bundmaterialstrang.

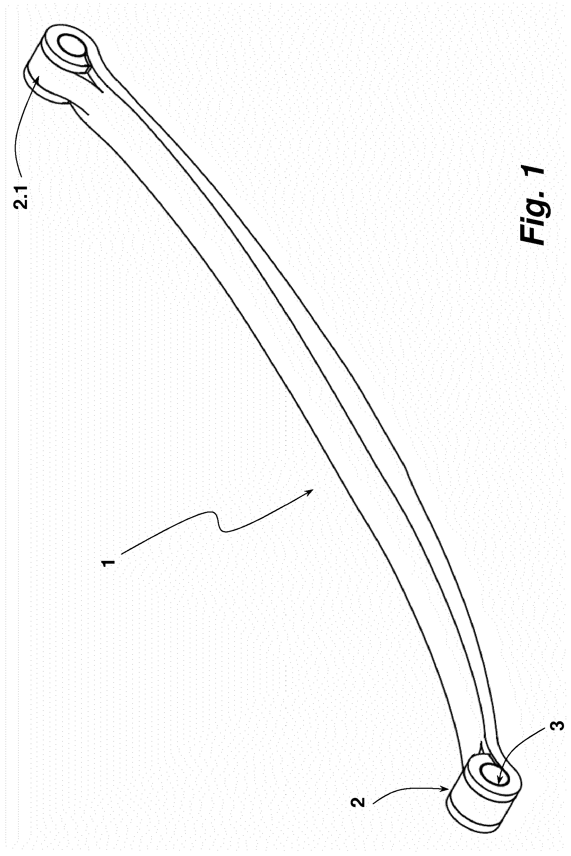

Figur 1 zeigt eine als langgestrecktes Faserverbundbauteil gefertigte Blattfeder 1. Die Blattfeder 1 ist aus einem Faserverbundmaterial in ihre in Figur 1 gezeigte Form gebracht worden. Als Faserverbundmaterial sind bei dem Ausführungsbeispiel der Figur 1 Faserstränge verwendet worden. Hergestellt worden ist die Faserverbundblattfeder 1 im Wege eines an sich bekannten Harzinjektionsverfahrens (Resin Transfer Molding). Bei diesem Verfahren werden die als textiles Halbzeug dienenden Faserstränge in eine Form eingelegt. In einem nachfolgenden Schritt wird der Harz in die Kavität der Form, in der die Faserstränge in der gewünschten Form angeordnet sind, eingespritzt (injiziert). Herstellen lässt sich die in Figur 1 gezeigte Blattfeder auch unter Verwendung von Prepregs.

An ihren beiden Enden trägt die Blattfeder 1 jeweils eine Lasteinleitungsstruktur 2, 2.1. Nachstehend ist die Lasteinleitungsstruktur 2 detaillierter beschrieben. Die Lasteinleitungsstruktur 2.1 ist bei dem dargestellten Ausführungsbeispiel identisch aufgebaut. Daher gelten die diesbezüglichen Ausführungen gleichermaßen für die Lasteinleitungsstruktur 2.1.

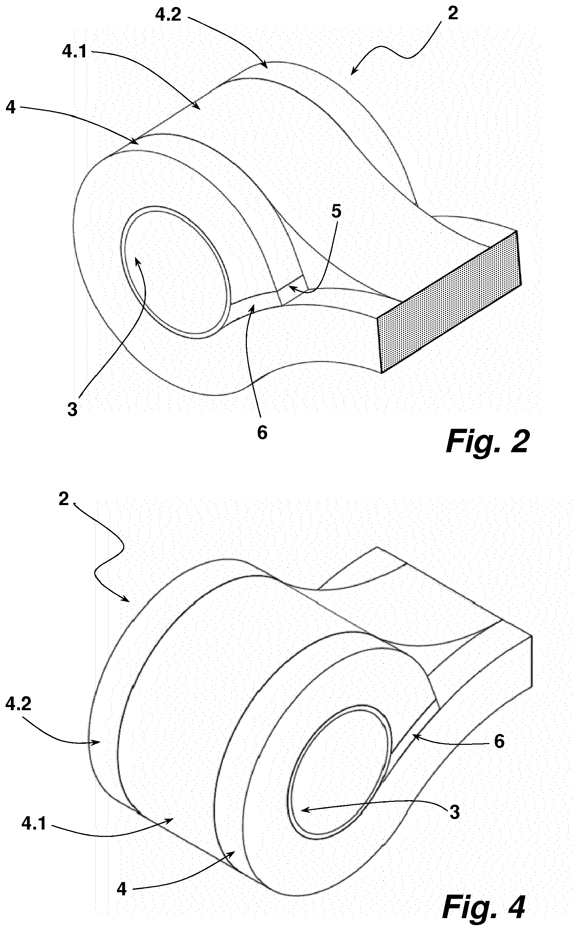

Die Lasteinleitungsstruktur umfasst als Lasteinleitungselement eine Metallhülse 3, durch die ein Auge bereitgestellt ist. Die Metallhülse 3 ist von dem Faserverbundmaterial entlang seiner radialen Mantelfläche eingefasst. Von Besonderheit ist bei der Lasteinleitungsstruktur 2 die Art und Weise der Einfassung der das Auge bildenden Hülse 3. Figur 2 zeigt die Lasteinleitungsstruktur 2 der Blattfeder 1 in einem Schnitt am Ende des eigentlichen Federblattes. Die Hülse 3 ist bei dem dargestellten Ausführungsbeispiel von drei Faserverbundmaterialsträngen 4, 4.1, 4.2 umschlungen. Die Faserverbundmaterialstränge 4, 4.1, 4.2 sind mit unterschiedlicher Umschlingungsrichtung um die Hülse 3 herumgeführt. Der Faserverbundmaterialstrang 4 ist mit Blick auf Figur 2 im Uhrzeigersinn um die Mantelfläche der Hülse 3 geschlungen. In derselben Umschlingungsrichtung ist ebenfalls der Faserverbundmaterialstrang 4.2 geführt. Der zwischen den beiden Faserverbundmaterialsträngen 4, 4.2 befindliche Faserverbundmaterialstrang 4.1 ist hingegen entgegen dem Uhrzeigersinn und somit gegensinnig zu den Faserverbundmaterialsträngen 4, 4.2 um die Hülse 3 geführt. Alle drei Faserverbundmaterialstränge 4, 4.1, 4.2 sind annähernd 360° um die Mantelfläche der Hülse 3 geführt. Der verbliebene Zwickel zwischen der jeweiligen endseitigen Stirnfläche, wie an der Stirnfläche 5 des Faserverbundmaterialstranges 4 kenntlich gemacht, und der Oberseite des Anfangs der Stränge 4, 4.1, 4.2 ist mit dem zur Aushärtung verwendeten Harz verfüllt. Dieser mit Harz verfüllte Zwickel ist in Figur 2 mit dem Bezugszeichen 6 kenntlich gemacht. Insofern ist durch jeden Faserverbundmaterialstrang 4, 4.1, 4.2 bei dem dargestellten Ausführungsbeispiel ein geschlossenes Auge um die radiale Mantelfläche der Hülse 3 gelegt.

Die Faserverbundmaterialstränge 4, 4.1, 4.2 sind in der Querebene des Längsverlaufs der Hülse 3 und somit in Verlauf der Längsrichtung der Blattfeder 1 geteilt, um die vorbeschriebene gegensinnige Umschlingung benachbarter Faserverbundmaterialstränge 4, 4.1 bzw. 4.1, 4.2 der Hülse 3 zu ermöglichen.

Durch die gegensinnige Umschlingung der Hülse 3 durch die Faserverbundmaterialstränge 4, 4.1, 4.2 kann die Lasteinleitungsstruktur 2 besonders hohen Belastungen ausgesetzt werden. Auf die Hülse 3 und damit auf die Lasteinleitungsstruktur 2 einwirkende Zug- oder auch Schubkräfte werden unabhängig von der Richtung ihres Angriffes anteilig zumindest immer in einen blattfedernahen Abschnitt eines Faserverbundmaterialstranges 4, 4.2 oder 4.1 eingeleitet.

Ein Öffnen der Umschlingung der Faserverbundmaterialstränge 4, 4.1, 4.2 bei auftretenden besonders hohen Zugkräften ist wirksam dadurch verhindert, dass diese mit ihren zueinanderweisenden Seiten und somit in Richtung der Längserstreckung der Hülse 3 großflächig stoffschlüssig durch das eingesetzte Harz zum Herstellen der Blattfeder 1 miteinander verbunden sind. Aus diesem Grunde sind benachbarte Faserverbundmaterialstränge 4, 4.1 bzw. 4.1, 4.2 soweit um die Hülse 3 geführt, dass diese in einem Abschnitt sich überlappen. Bei dem dargestellten Ausführungsbeispiel beträgt die Überlappung etwas weniger als 360°.

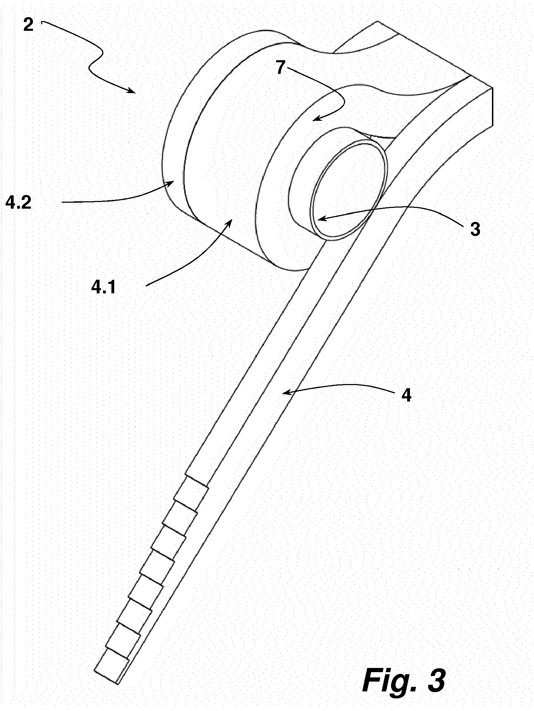

Figur 3 zeigt zur Verdeutlichung der vorbeschriebenen Umschlingung die Lasteinleitungsstruktur 2 mit dem zum Teil von der Hülse 3 abgewickelten Faserverbundmaterialstrang 4. Der Verbund benachbarter Faserverbundmaterialstränge, hier: des Faserverbundmaterialstranges 4 und des Faserverbundmaterialstranges 4.1, erfolgt über die aneinandergrenzenden und infolge des Harzes stoff- und somit kraftschlüssig miteinander verbundenen Seitenflächen 7. Da bei dem dargestellten Ausführungsbeispiel die Umschlingung der Hülse 3 durch die Faserverbundmaterialstränge 4, 4.1, 4.2 fast über 360° erfolgt, ist die Kontaktfläche zweier benachbarter Faserverbundmaterialstränge besonders groß. Von Interesse ist, dass aufgrund der gegensinnigen Umschlingung der Hülse 3 durch die Faserverbundmaterialstränge 4, 4.1, 4.2 diese bei einer Zugbelastung ebenfalls nur gegensinnig von der Mantelfläche der Hülse 3 gelöst werden können. Dieses ist jedoch wirksam durch den stofflichen Verbund zwischen den benachbarten Faserverbundmaterialsträngen 4, 4.1 sowie 4.1, 4.2 unterbunden. Der Verbund ist für das für die Aushärtung des Faserverbundbauteils eingesetzte Harz ohne weiteres hinreichend stark, um derartigen Scherkräften standzuhalten.

Figur 4 zeigt die Lasteinleitungsstruktur 2 aus der Perspektive der Darstellung der Figur 3 mit dem an die Seitenfläche 7 stofflich angebundenen Faserverbundmaterialstrang 4.

Bei dem dargestellten Ausführungsbeispiel ist die Umschlingung der Metallhülse 3 in Bezug auf ihre mittlere Querebene symmetrisch aufgebaut. Dieses kann, wenn dieses durch entsprechende Anforderungen gefordert wird, auch unsymmetrisch ausgelegt sein. Bei dem dargestellten Ausführungsbeispiel ist die Querschnittsfläche des Faserverbundmaterialstranges 4.1 größer als die Summe der Querschnittsflächen der Faserverbundmaterialstränge 4, 4.2, und zwar in einem Verhältnis von etwa 5:3.

Mit dem vorbeschriebenen Konzept kann somit jede Lasteinleitungsstruktur 2, 2.1 an die jeweils darauf einwirkenden Anforderungen optimiert ausgelegt werden. Insbesondere brauchen die Lasteinleitungsstrukturen 2, 2.1 nicht, wie dies zwar bei dem dargestellten Ausführungsbeispiel der Fall ist, identisch zu sein. Durchaus möglich ist es, beispielsweise die in Fahrtrichtung vordere Lasteinleitungsstruktur hinsichtlich der Auslegung der Umschlingung der Metallhülse 3 anders auszugestalten als die in Fahrtrichtung hintere Lasteinleitungsstruktur.

Bei dem beschriebenen Ausführungsbeispiel ist der Faservolumengehalt über die Länge der Blattfeder 1 konstant.

Simulationen hinsichtlich der Beanspruchbarkeit der Blattfeder 1 im Vergleich zu einer herkömmlichen als Faserverbundbauteil gefertigten Blattfeder illustrieren die deutlich besseren Eigenschaften. Als Vergleichsblattfeder diente eine Blattfeder, wie diese in DE 10 2010 009 528 A1 beschrieben ist. Die Maße beider Blattfedern, die der Simulation unterworfen worden sind, waren gleich. Bei der Simulation wurde die Beanspruchung dieser Blattfedern bei einem Einsatz in einem Kleintransporterfahrzeug simuliert. Die untersuchten Lastfälle zeigen die deutlich verbesserten Eigenschaften der erfindungsgemäßen Blattfeder. In der nachstehenden Tabelle ist für die erfindungsgemäße Blattfeder jeweils der prozentuale Anteil der sich bei der Simulation ergebenden Querzugspannungen als Anteil an den ermittelten Querzugspannungen der Vergleichsfeder, deren Werte auf 100% normiert sind, angegeben:

| **Lastfall** | **ermittelte Querzugspannung** |
|---|---|
| dynamische Vertikalbeanspruchung | 30 % |
| Bremsen vorwärts | 40 % |
| Bremsen rückwärts | 90 % |
| Kurvenfahrt | 30 % |
| Achsverschränkung | 30 % |

Die Ergebnisse zeigen, dass aufgrund der besonderen Art der Ausbildung der Lasteinleitungsstrukturen die in die jeweiligen Belastungsfällen eingeleiteten Querzugspannungen signifikant geringer sind als dieses bei der Vergleichsblattfeder der Fall ist.

Die Erfindung ist beispielhaft anhand einer Parabelfeder beschrieben worden. Es versteht sich, dass sich das Konzept der Erfindung auch bei anderen Teilen, insbesondere auch Fahrwerksteilen, wie beispielsweise Stabilisatoren oder Lenker einsetzten lässt. Einsetzen lässt sich ein solches Faserverbundbauteil auch zur Ausbildung von Anschlagmitteln oder in anderem Zusammenhang eingesetzte Haken oder Ösen.

### Bezugszeichenliste

- 1: Blattfeder
- 2, 2.1: Lasteinleitungsstruktur
- 3: Metallhülse
- 4, 4.1, 4.2: Faserverbundmaterialstrang
- 5: Stirnfläche
- 6: Zwickel
- 7: Seitenfläche

## Patentansprüche

1. Ein als Feder ausgeführtes Faserverbundbauteil mit wenigstens einem Federabschnitt und mit wenigstens einer Lasteinleitungsstruktur (2, 2.1), wobei das Faserverbundmaterial des Faserverbundbauteils (1) in dem das Lasteinleitungselement (3) bildenden oder einfassenden Endabschnitt in einer Ebene quer zur Längserstreckung der Lasteinleitungsstruktur (2, 2.1) in zumindest zwei Faserverbundmaterialstränge (4, 4.1, 4.2) geteilt ist, **dadurch gekennzeichnet, dass** zwei benachbarte Faserverbundmaterialstränge (4, 4.1, 4.2) zur Ausbildung jeweils eines Auges gegensinnig unter Ausbildung einer sich über einen bestimmten Winkelbetrag erstreckenden Überlappung geführt und mit ihren zueinander weisenden Seitenflächen (7) in dem Abschnitt, in dem diese überlappend angeordnet sind, kraftschlüssig miteinander verbunden sind.

2. Faserverbundbauteil nach Anspruch 1, **dadurch gekennzeichnet, dass** am Aufbau der Lasteinleitungsstruktur (2, 2.1) eine ungerade Anzahl an Faserverbundmaterialsträngen (4, 4.1, 4.2) beteiligt ist.

3. Faserverbundbauteil nach Anspruch 1 oder 2, **dadurch gekennzeichnet, dass** die Querschnittsfläche der einzelnen Faserverbundmaterialstränge gleich ist.

4. Faserverbundbauteil nach Anspruch 1 oder 2, **dadurch gekennzeichnet, dass** die Summe der Querschnittsflächen der Faserverbundmaterialstränge in den beiden Umschlingungsrichtungen gleich ist.

5. Faserverbundbauteil nach einem der Ansprüche 1 bis 4, **dadurch gekennzeichnet, dass** die Augenausbildung durch die Faserverbundmaterialstränge (4, 4.1, 4.2) in Bezug auf die mittige Querebene der Längserstreckung der Lasteinleitungsstruktur (2, 2.1) symmetrisch vorgesehen ist.

6. Faserverbundbauteil nach einem der Ansprüche 1 bis 4, **dadurch gekennzeichnet, dass** die Augenausbildung durch die Faserverbundmaterialstränge in Bezug auf die mittige Querebene der Längserstreckung der Lasteinleitungsstruktur asymmetrisch vorgesehen ist.

7. Faserverbundbauteil nach einem der Ansprüche 1 bis 6, **dadurch gekennzeichnet, dass** die Augenausbildung durch die Faserverbundmaterialstränge (4, 4.1, 4.2) unter Ausbildung jeweils eines geschlossenen Auges ausgeführt ist.

8. Faserverbundbauteil nach einem der Ansprüche 1 bis 7, **dadurch gekennzeichnet, dass** das Faserverbundmaterial des Faserverbundbauteils (1) Faserstränge (4, 4.1, 4.2) sind.

9. Faserverbundbauteil nach Anspruch 8, **dadurch gekennzeichnet, dass** der Faservolumengehalt in einzelnen Fasersträngen (4, 4.1, 4.2) unterschiedlich ist.

10. Faserverbundbauteil nach einem der Ansprüche 1 bis 9, **dadurch gekennzeichnet, dass** der Faservolumengehalt in dem zumindest einen Endabschnitt geringer ist als in dem daran angeformten Federabschnitt.

11. Faserverbundbauteil nach Anspruch 10, **dadurch gekennzeichnet, dass** der Faservolumengehalt in dem wenigsten einen Endabschnitt 5 % bis 30 % geringer ist als in dem Federabschnitt.

12. Faserverbundbauteil nach Anspruch 10 oder 11, **dadurch gekennzeichnet, dass** die Decklagen der Faserstränge durchgehend sind.

13. Faserverbundbauteil nach einem der Ansprüche 1 bis 12, **dadurch gekennzeichnet, dass** durch die Faserverbundstränge (4, 4.1, 4.2) ein Lasteinleitungselement umschlungen ist.

14. Faserverbundbauteil nach Anspruch 13, **dadurch gekennzeichnet, dass** es sich bei dem Lasteinleitungselement um eine Metallhülse (3) handelt.

15. Faserverbundbauteil nach einem der Ansprüche 1 bis 14, **dadurch gekennzeichnet, dass** das Faserverbundbauteil (1) langgestreckt ist und an seinen beiden Enden eine Lasteinleitungsstruktur (2, 2.1) aufweist.

16. Faserverbundbauteil nach Anspruch 15, **dadurch gekennzeichnet, dass** das Faserverbundbauteil (1) ein Teil einer Radaufhängung eines Fahrzeuges ist.

17. Faserverbundbauteil nach Anspruch 16, **dadurch gekennzeichnet, dass** das Faserverbundbauteil eine Blattfeder (1), insbesondere eine Parabelfeder, ist.

## Claims

1. A fibre composite component with at least one spring section and at least one force transfer structure (2, 2.1), wherein the fibre composite material of the fibre composite component (1), in the end portion forming or surrounding the force transfer element (3), is divided in a plane perpendicular to the longitudinal direction of the force transfer structure (2, 2.1) into at least two fibre composite material strands (4, 4.1, 4.2), **characterised in that** two adjacent fibre composite material strands (4, 4.1, 4.2), in order to form in each case an eye, run in opposite directions, with the formation of an overlap extending over a specific angular portion, and with their mutually opposed side faces (7) being connected to one another in non-positive fit in the overlapping portion.

2. Fibre composite component according to claim 1, **characterised in that** an odd number of fibre composite material strands (4, 4.1, 4.2) are involved in the formation of the force transfer structure (2, 2.1).

3. Fibre composite component according to claim 1 or 2, **characterised in that** the cross-section surface area of the individual fibre composite material strands is equal.

4. Fibre composite component according to claim 1 or 2, **characterised in that** the sum of the cross-section surface areas of the fibre composite material strands is equal in both the wrapping directions.

5. Fibre composite component according to any one of claims 1 to 4, **characterised in that** the eye formation by the fibre composite material strands (4, 4.1, 4.2) is provided as symmetrical in relation to the middle transverse plane of the longitudinal direction of the load transfer structure (2, 2.1).

6. Fibre composite component according to any one of claims 1 to 4, **characterised in that** the eye formation by the fibre composite material strands is provided as asymmetrical in relation to the middle transverse plane of the longitudinal direction of the force transfer structure.

7. Fibre composite component according to any one of claims 1 to 6, **characterised in that** the eye formation by the fibre composite material strands (4, 4.1, 4.2) is carried out with the formation in each case of a closed eye.

8. Fibre composite component according to any one of claims 1 to 7, **characterised in that** the fibre composite material of the fibre composite component (1) is fibre strands (4, 4.1, 4.2).

9. Fibre composite component according to claim 8, **characterised in that** the fibre volume contents is different in the individual fibre strands (4, 4.1, 4.2).

10. Fibre composite component according to any one of claims 1 to 9, **characterised in that** the fibre volume content in the at least one end portion is less than in the spring section formed at the end portion.

11. Fibre composite component according to claim 10, **characterised in that** the fibre volume content in the at least one end portion is 5% to 30% less than in the spring section.

12. Fibre composite component according to claim 10 or 11, **characterised in that** the cover layers of the fibre strands.

13. Fibre composite component according to any one of claims 1 to 12, **characterised in that** a force transfer element is looped around by the fibre composite strands (4, 4.1, 4.2).

14. Fibre composite component according to claim 13, **characterised in that** the force transfer element is a metal sleeve (3).

15. Fibre composite component according to any one of claims 1 to 14, **characterised in that** the fibre composite component (1) is longitudinally extended and comprises at each end a force transfer structure (2, 2.1).

16. Fibre composite component according to claim 15, **characterised in that** the fibre composite component (1) is a part of a wheel suspension of a motor vehicle.

17. Fibre composite component according to claim 16, **characterised in that** the fibre composite component is a leaf spring (1), in particular a parabolic spring.

## Revendications

1. Élément composite renforcé par des fibres conformé en tant que ressort, comportant au moins un tronçon élastique et avec au moins une structure (2, 2.1) d'introduction de charge, le matériau composite renforcé par des fibres de l'élément (1) composite renforcé par des fibres, dans lequel le tronçon d'extrémité formant ou enserrant l'élément (3) d'introduction de charge étant subdivisé, sur un plan transversal par rapport à l'étendue longitudinale de la structure (2, 2.1) d'introduction de charge, en au moins deux faisceaux (4, 4.1, 4.2) de matériau composite renforcé par des fibres, **caractérisé en ce que** deux faisceaux (4, 4.1, 4.2) voisins de matériau composite renforcé par des fibres sont respectivement guidés dans le sens contraire, afin de former un œil, tout en formant une superposition s'étendant sur un certaine valeur angulaire et sont raccordés solidairement l'un avec l'autre par leurs faces latérales (7) orientées l'une vers l'autre dans le tronçon, dans lequel ils sont disposés de manière superposée.

2. Élément composite renforcé par des fibres selon la revendication 1, **caractérisé en ce qu'un** nombre impair de faisceaux (4, 4.1, 4.2) de matériau composite renforcé par des fibres sont impliqués dans la construction de la structure (2, 2.1) d'introduction de charge.

3. Élément composite renforcé par des fibres selon la revendication 1 ou 2, **caractérisé en ce que** la section transversale des faisceaux unitaires de matériau composite renforcé par des fibres est identique.

4. Élément composite renforcé par des fibres selon la revendication 1 ou 2, **caractérisé en ce que** la somme des sections transversales des faisceaux de matériau composite renforcé par des fibres est identique dans les deux directions de bouclage.

5. Élément composite renforcé par des fibres selon l'une des revendications 1 à 4, **caractérisé en ce que** la formation de l'œil par les faisceaux (4, 4.1, 4.2) de matériau composite renforcé par des fibres est prévue symétriquement par rapport au plan transversal médian de l'étendue longitudinale de la structure (2, 2.1) d'introduction de charge.

6. Élément composite renforcé par des fibres selon l'une des revendications 1 à 4, **caractérisé en ce que** la formation de l'œil par les faisceaux de matériau composite renforcé par des fibres est prévue asymétriquement par rapport au plan transversal médian de l'étendue longitudinale de la structure d'introduction de charge.

7. Élément composite renforcé par des fibres selon l'une des revendications 1 à 6, **caractérisé en ce que** la formation de l'œil par les faisceaux (4, 4.1, 4.2) de matériau composite renforcé par des fibres est réalisée en formant respectivement un œil fermé.

8. Élément composite renforcé par des fibres selon l'une des revendications 1 à 7, **caractérisé en ce que** le matériau composite renforcé par des fibres de l'élément (1) composite renforcé par des fibres est des faisceaux (4, 4.1, 4.2) de fibres.

9. Élément composite renforcé par des fibres selon la revendication 8, **caractérisé en ce que** la teneur volumique de fibres dans les différents faisceaux (4, 4.1, 4.2) de fibres est différente.

10. Élément composite renforcé par des fibres selon l'une des revendications 1 à 9, **caractérisé en ce que** la teneur volumique de fibres dans au moins un tronçon d'extrémité est plus faible que dans le tronçon élastique moulé sur celui-ci.

11. Élément composite renforcé par des fibres selon la revendication 10, **caractérisé en ce que** la teneur volumique de fibres dans au moins un tronçon d'extrémité est de 5 % à 30 % plus faible que dans le tronçon élastique.

12. Élément composite renforcé par des fibres selon la revendication 10 ou 11, **caractérisé en ce que** les couches de recouvrement des faisceaux de fibres sont continues.

13. Élément composite renforcé par des fibres selon l'une des revendications 1 à 12, **caractérisé en ce qu'**un élément d'introduction de charge est englobé par les faisceaux (4, 4.1, 4.2) composites de fibres.

14. Élément composite renforcé par des fibres selon la revendication 13, **caractérisé en ce que** l'élément d'introduction de charge est une douille métallique (3).

15. Élément composite renforcé par des fibres selon l'une des revendications 1 à 14, **caractérisé en ce que** l'élément (1) composite renforcé par des fibres est étendu longitudinalement et présente, à l'une de ses deux extrémités, une structure (2, 2.1) d'introduction de charge.

16. Élément composite renforcé par des fibres selon la revendication 15, **caractérisé en ce que** l'élément (1) composite renforcé par des fibres fait partie d'une suspension de roues d'un véhicule.

17. Élément composite renforcé par des fibres selon la revendication 16, **caractérisé en ce que** l'élément composite renforcé par des fibres est un ressort à lames (1), notamment un ressort parabolique.
